# EUROPÄISCHE PATENTSCHRIFT

(11) **EP 3 620 669 B1**
(45) Veröffentlichungstag und Bekanntmachung des Hinweises auf die Patenterteilung: **01.09.2021**
(21) Anmeldenummer: 19189506.9
(22) Anmeldetag: 01.08.2019
(51) Int. Cl.: F16B 13/06

(54) **SPREIZANKER**
EXPANDING ANCHOR
ANCRE EXTENSIBLE

(30) Priorität: 06.08.2018 DE 102018119075
(43) Veröffentlichungstag der Anmeldung: 11.03.2020
(73) Patentinhaber: fischerwerke GmbH & Co. KG, 72178 Waldachtal (DE)
(72) Erfinder: Hirschle, Tobias, 71131 Jettingen (DE); Linka, Martin, 72160 Horb a.N. (DE)
(74) Vertreter: Suchy, Ulrich Johannes

(56) Entgegenhaltungen:
- DE-A1- 4 344 421
- KR-A- 20090 118 673

## Beschreibung

Die Erfindung betrifft einen Spreizanker zur Verankerung in einem Befestigungsgrund mit den Merkmalen des Oberbegriffs des Anspruchs 1.

Ein gattungsgemäßer Spreizanker ist aus der Patentschrift EP 3 252 323 A1 bekannt. Dieser Spreizanker weist einen Ankerschaft mit einem vorderen und einem hinteren Ende auf. An dem vorderen Ende ist ein Spreizkonus mit einer Spreizhülse angeordnet. An dem hinteren Ende des Ankerschafts ist eine Werkzeugschlagfläche sowie ein Gewindeabschnitt mit einer Mutter und einer Unterlegscheibe angeordnet. Über die Werkzeugschlagfläche kann der Spreizanker in ein vorgefertigtes Bohrloch in einem Befestigungsgrund, insbesondere aus Beton, schlagend eingetrieben werden. Der Einschlagvorgang ist spätestens dann beendet, wenn eine in Einbringrichtung vor der Mutter angeordnete Unterlegscheibe mit einer Oberfläche eines am Befestigungsgrund angeordneten Anbauteils in Kontakt tritt. Anschließend wird die Mutter mit einer Drehenergie beaufschlagt und zwar derart, dass sie sich in Richtung des vorderen Endes des Spreizankers bewegt. Wenn die Mutter an der Unterlegscheibe anliegt, wird dadurch der Ankerschaft entgegen der Einbringrichtung bewegt, wodurch die Spreizhülse auf den Spreizkonus gezogen und gegenüber dem Bohrloch im Befestigungsgrund verspannt wird.

Aufgabe der Erfindung ist es, einen Spreizanker vorzuschlagen, der eine Spreizhülse mit einer optimierten Geometrie aufweist, wodurch ein Einbringen des Spreizankers mit geringem Kraftaufwand in den Befestigungsgrund, ein besonders gutes Spreizverhalten der Spreizhülse und ein hoher Auszugswiderstand des Spreizankers aus dem Befestigungsgrund heraus erreicht wird.

Diese Aufgabe wird erfindungsgemäß durch die Merkmale des Anspruchs 1 gelöst. Die Erfindung betrifft einen Spreizanker zur Verankerung in einem Befestigungsgrund, der einen Ankerschaft aus Metall, insbesondere aus verzinktem Stahl oder Edelstahl, umfasst, der sich insbesondere rotationssymmetrisch bezüglich einer Längsachse erstreckt. Bei dem erfindungsgemäßen Spreizanker kann es sich um einen Bolzenanker, einen Hülsenanker oder um einen Einschlaganker handeln. Bei einem Bolzenanker ist der Ankerschaft meist starr mit einem Spreizelement, insbesondere einem Spreizkonus, verbunden, wohingegen bei einem Hülsenanker der Ankerschaft ein Spreizelement aufweist, welches verschieblich auf dem Ankerschaft angeordnet ist. Ein Einschlaganker zeichnet sich insbesondere dadurch aus, dass dieser in einem ersten Schritt in einen Untergrund eingetrieben und anschließend in einem zweiten Schritt durch ein schlagendes Eintreiben des Spreizelements oder der Spreizhülse im Untergrund verspannt wird.

Der Ankerschaft weist ein vorderes und ein hinteres Ende auf, wobei das vordere Ende beim planmäßigen Einbringen des Spreizankers in ein Bohrloch im Befestigungsgrund als erstes in den Befestigungsgrund eingebracht wird. Das hintere Ende weist insbesondere eine Werkzeugschlagfläche zum Eintreiben des Ankerschafts in den Befestigungsgrund auf. Am vorderen Ende des Ankerschafts ist ein Spreizbereich mit einem Spreizelement zum Aufspreizen einer Spreizhülse angeordnet. Das Spreizelement ist derart gestaltet, dass die Spreizhülse in radialer Richtung aufspreizt, wenn sie in Längsrichtung auf das Spreizelement aufgeschoben wird. Das Spreizelement ist insbesondere als ein bezüglich der Längsachse des Ankerschafts rotationssymmetrischer Konus ausgebildet und verjüngt sich vom vorderen Ende des Ankerschafts in Richtung des hinteren Endes des Ankerschafts. Am vorderen Ende des Ankerschafts kann das Spreizelement einen zylindrischen Bereich aufweisen, der in den sich verjüngenden Bereich übergeht. Der Spreizbereich wird insbesondere durch das Spreizelement gebildet, so dass die Länge des Spreizbereichs der Länge des Spreizelements entspricht. Insbesondere entspricht die Länge eines das Spreizelement bildenden Konus der Länge des Spreizbereichs. Die Spreizhülse ist zumeist aus einem Blech gestanzt und kann eine Beschichtung aufweisen, die beispielsweise die Korrosionsbeständigkeit erhöht. Die Spreizhülse ist derart in Umfangsrichtung um den Ankerschaft gebogen, dass die Spreizhülse den Ankerschaft zumindest teilweise, vorteilhafterweise jedoch komplett oder nahezu komplett umschließt. Vorteilhafterweise grenzt die Spreizhülse im unverspreizten Zustand in Richtung des vorderen Endes des Ankerschafts an den konischen Bereich an und wird gegen eine Bewegung in Richtung des hinteren Endes des Ankerschafts während des Einschlagens in den Befestigungsgrund beispielsweise durch eine Schulter am Ankerschaft oder einen anderweitig ausgestalteten Anschlag gegen eine Bewegung in Längsrichtung am Ankerschaft gesichert. Die Spreizhülse ist auf das Spreizelement, insbesondere den Spreizkonus, in Richtung des vorderen Endes des Ankerschafts aufschiebbar, wodurch die Spreizhülse radial bezüglich der Längsachse des Ankerschafts aufspreizbar ist. "Aufschiebbar" meint hier allgemein, dass die Spreizhülse durch eine Relativbewegung zum Ankerschaft auf das Spreizelement bewegt werden kann, was einem Einziehen des Spreizelements in die Spreizhülse gleichzusetzen ist.

Die Spreizhülse weist mehrere, insbesondere drei, Schlitze auf, die in Richtung der Längsachse des Ankerschafts verlaufen. Von den mehreren Schlitzen teilt insbesondere ein Schlitz die Spreizhülse in Längsachse des Ankerschafts gänzlich. Der die Spreizhülse gänzlich teilende Schlitz entsteht insbesondere dadurch, dass die Spreizhülse, die in einer Abwicklung ein flaches Stück Blech ist, um den Ankerschaft gebogen ist. Die insbesondere zwei übrigen Schlitze erstrecken sich von einem vorderen Ende der Spreizhülse, welches in Richtung des vorderen Endes des Ankerschafts orientiert ist, in Richtung eines hinteren Endes der Spreizhülse, welches in Richtung des hinteren Endes des Ankerschafts orientiert ist. Eine Spreizhülsenlänge ist durch das vordere und das hintere Ende der Spreizhülse definiert. Die insbesondere zwei übrigen Schlitze durchdringen das hintere Ende der Spreizhülse nicht, sondern erstrecken sich auf vorzugsweise zwischen 20% und maximal 85% der Spreizhülsenlänge, beginnend vom vorderen Ende in Richtung des hinteren Endes der Spreizhülse. Die Schlitze teilen die Spreizhülse, in Umfangsrichtung des Ankerschafts gesehen, in insbesondere identisch große Spreizsegmente, wobei das Aufspreizverhalten der Spreizhülse von der Länge der Schlitze abhängt. "Kürzere" Schlitze führen zu "kürzeren" Spreizsegmenten, woraus eine eher steife Spreizhülse resultiert. "Längere" Schlitze führen zu "längeren" Spreizsegmenten, welche zu einer eher weichen Spreizhülse führen. Unter "steif" und "weich" ist zu verstehen, dass bei einer steifen Spreizhülse eine größere und bei einer weichen Spreizhülse eine geringere Kraft zum Aufspreizen aufgewendet werden muss. Anders gesprochen, weisen Spreizsegmente, die sich über einen Großteil der Speizhülsenlänge erstrecken, einen Spreizpunkt am hinteren Ende der Spreizhülse auf, wodurch die Spreizhülse mit geringeren Kräften aufspreizbar ist. Sind die Spreizsegmente hingegen nur im vorderen Teil der Spreizhülse ausgebildet, ist der Spreizpunkt näher am vorderen Ende orientiert, wodurch eine größere Kraft zum Aufspreizen der Spreizhülse benötigt wird. Unter einem "Spreizpunkt" soll im Wesentlichen die Position verstanden werden, um welche sich ein einzelnes Spreizsegment drehpunktartig in Richtung des Befestigungsgrunds spreizt, wobei die "Position" auch ein definierter Punkt oder ein Bereich sein kann.

Mindestens ein Spreizsegment weist eine Ausnehmung auf, die mit den Schlitzen nicht verbunden ist. Mit "Ausnehmung" ist hier eine Schwächung der Materialdicke, also eine Vertiefung, eine lokal begrenzte Nut oder eine Bohrung oder eine Öffnung gemeint. Die Ausnehmung erstreckt sich von einer Spreizsegmentaußenseite, die nach dem Einbringen dem Befestigungsgrund zugewandt ist, in Richtung einer Spreizsegmentinnenseite, die der Längsachse des Ankerschafts zugewandt ist. Die Spreizsegmentaußenseite und die Spreizsegmentinnenseite definieren die Materialstärke des Spreizsegments. Wenn von "einer Ausnehmung" in "einem Spreizsegment" gesprochen wird, ist stellvertretend zu verstehen, dass mehrere oder jedes vorhandene Spreizsegment eine Ausnehmung aufweisen kann. Die Ausnehmung im Spreizsegment erstreckt sich in Umfangsrichtung bevorzugt über mehr als 30%, besonders bevorzugt über mehr als 50% einer jeweiligen Breite eines Spreizsegments. Weiter ist eine Tiefe der Ausnehmung in dem Spreizsegment bevorzugt tiefer als 20%, besonders bevorzugt jedoch tiefer als 30% der Materialstärke des Spreizsegments. Die Ausnehmung ist bevorzugt durch ein Pressverfahren hergestellt, durch welches die Ausnehmung in das Spreizsegment gepresst wird. Insbesondere wird die Ausnehmung nicht durch Materialabtrag hergestellt. Durch das Pressverfahren wird das Material des Spreizsegments an der Stelle der Ausnehmung verfestigt, wodurch an dieser Stelle die Verformung des Spreizsegments erschwert wird, was in höheren Tragwerten des Spreizankers im Befestigungsgrund resultiert.

Mindestens ein Schlitz, der zwei Spreizsegmente voneinander trennt, weist in Umfangsrichtung eine lokale Aufweitung auf. Mit "Aufweitung" ist hier eine Vergrößerung der Breite des Schlitzes in Umfangsrichtung gemeint. Die lokale Aufweitung im Schlitz resultiert in einem Einschnitt in einem, bevorzugt jedoch in zwei benachbarten, Spreizsegmenten, die von dem jeweiligen Schlitz getrennt sind. Unter "einer lokalen Aufweitung" soll stellvertretend auch verstanden werden, dass jeder Schlitz eine lokale Aufweitung aufweisen kann.

Kennzeichnend für die Erfindung ist, dass die Ausnehmung und die lokale Aufweitung derart in einem vorderen Abschnitt der Spreizhülse angeordnet sind, dass sie in einem verspreizten Zustand des Spreizankers im Spreizbereich des Ankerschafts angeordnet sind. Unter einem "vorderen Abschnitt" ist insbesondere ein Abschnitt zwischen dem vorderen und dem hinteren Ende der Spreizhülse zu verstehen, der sich vom vorderen Ende auf maximal einer Länge von 40% der Spreizhülsenlänge in Richtung des hinteren Endes erstreckt. Bevorzugt erstreckt sich der vordere Abschnitt maximal auf einer Länge von 30% der Spreizhülsenlänge, insbesondere maximal auf einer Länge von 20% der Spreizhülsenlänge.

Im unverspreizten Zustand der Spreizhülse ist der Spreizanker mit geringem Kraftaufwand in den Befestigungsgrund einbringbar, da die Spreizsegmentaußenseite im Wesentlichen parallel zu der Bohrlochwandung im Befestigungsgrund verläuft. Sobald die Spreizhülse durch den Spreizbereich aufgespreizt wird, wird ein vorderer Rand der Ausnehmung an der Spreizsegmentaußenseite, der in Richtung des vorderen Endes der Spreizhülse orientiert ist, in Richtung der Bohrlochwandung gepresst, wodurch der Rand sich in die Bohrlochwandung "einschneidet", also mit der Bohrlochwandung eine formschlüssige und/oder reibschlüssige Verbindung bildet. Diese Verbindung wirkt einem Herausziehen des Spreizankers aus dem Befestigungsgrund entgegen, wodurch die Haltewerte erhöht werden. Wird die Spreizhülse weiter auf den Spreizbereich geschoben, tritt der vordere Rand außer Eingriff zu der Bohrlochwandung. Jedoch tritt sodann ein hinterer Rand der Ausnehmung an der Spreizsegmentaußenseite, der in Richtung des hinteren Endes der Spreizhülse orientiert ist, mit der Bohrlochwandung in insbesondere form- und/oder reibschlüssigen Kontakt, wodurch die Traglast des erfindungsgemäßen Spreizankers ebenfalls erhöht ist.

Insbesondere dann, wenn das Material der Spreizhülse an der Ausnehmung durch Umformen statt Abtragen verfestigt und dadurch versteift ist, wodurch eine Verformung des Spreizsegments an dieser Stelle erschwert wird, sorgt die lokale Aufweitung dafür, dass sich, insbesondere an der Stelle, an der die lokale Aufweitung angeordnet ist, das Spreizsegment aufgrund des in Umfangsrichtung geschwächten Querschnitts leichter verspreizen lässt. Unter "leichter" ist zu verstehen, dass eine geringere Kraft zum Verspreizen der Spreizsegmente benötigt wird, als wenn kein geschwächter Querschnitt vorliegen würde. Anders gesprochen, wirken die Ausnehmung und die lokale Aufweitung derart zusammen, dass die lokale Aufweitung eine Verformung im Bereich einer verfestigten Ausnehmung begünstigt. Unter einem "verspreizten Zustand des Spreizankers" ist auch ein "spreizender Zustand" zu verstehen. Dies bedeutet, dass, sobald die Spreizhülse gespreizt wird, die Ausnehmung mit der Bohrlochwandung wechselwirkt. Durch die Wechselwirkung zwischen der Länge der Spreizsegmente, der Ausnehmung und der lokalen Aufweitung kann das Aufspreizverhalten und das Tragverhalten des Spreizankers signifikant beeinflusst werden.

Um eine möglichst gute Wechselwirkung zwischen der Ausnehmung und der lokalen Aufweitung zu erreichen, liegen in einer vorteilhaften Ausgestaltung der Erfindung die Ausnehmung und die lokale Aufweitung bezüglich der Längsachse des Ankerschafts in derselben Radialebene. Hierunter ist zu verstehen, dass die Ausnehmung und die radiale Aufweitung auf dem Spreizsegment bezüglich der Längsachse des Ankerschafts im Wesentlichen auf einer gleichen Höhe liegen, also im gleichen Abstand vom vorderen oder hinteren Ende des Spreizankers. Hierdurch ist gewährleistet, dass die radiale Aufweitung eine Verformung der Ausnehmung begünstigt. Unter "in derselben Radialebene" ist nicht zu verstehen, dass die Ausnehmung und die lokale Aufweitung exakt symmetrisch zueinander angeordnet sein müssen. So kann es sinnvoll sein, die Ausnehmung und die lokale Aufweitung bezogen auf die Symmetrieachse zueinander versetzt anzuordnen, jedoch nur soweit, dass eine Interaktion stets gewährleistet ist. Dies ist insbesondere dann gewährleistet, wenn die Radialebene die lokale Aufweitung und die Ausnehmung an einer beliebigen Stelle schneidet oder berührt.

Um einen möglichst guten Halt der Ausnehmung im Bohrloch zu ermöglichen und unter dem Gesichtspunkt einer möglichst einfachen Herstellung, ist in einer weiteren vorteilhaften Ausgestaltung der Erfindung die Ausnehmung bevorzugt geometrisch kreisrund ausgestaltet. Alternativ weist die Ausnehmung eine halbmondähnliche Form auf. Es sind auch weitere geometrische Ausgestaltungen, wie beispielsweise eine quadratische, rechteckige oder generell vieleckige Ausgestaltung möglich. Die Aufzählung ist nicht abschließend. Die Ausnehmung kann zusätzlich ein weiteres gegen Auszug sicherndes Element umfassen. Bei diesem Element kann es sich beispielsweise um eine kreisrunde Struktur handeln, die an einem Grund der Ausnehmung insbesondere zentrisch angeordnet ist und zapfen-, kegel- oder pyramidenartig in Richtung der Spreizsegmentaußenseite ragt. Die lokale Aufweitung ist ebenfalls insbesondere kreisrund ausgestaltet. Jedoch kann die lokale Aufweitung auch rechteck- oder dreieckförmig ausgestaltet sein.

In einer weiteren vorteilhaften Ausgestaltung der Erfindung durchdringt die Ausnehmung das Spreizsegment vollständig. Eine derartige Ausnehmung ist vorzugsweise durch Ausstanzen gefertigt und bietet die Möglichkeit, ein, bezogen auf das Biegeverhalten, relativ "weiches" Spreizsegment zu schaffen. Dies ist darauf zurückzuführen, dass in der Ausnehmung Material entfernt und nicht durch Umformen verdrängt ist. Durch das Entfernen wird der Querschnitt des Spreizsegments geschwächt, das Material aber nicht oder nur unwesentlich verfestigt, so dass der Widerstand gegen Biegung verringert wird.

Zudem gewährleistet eine derartige Ausgestaltung, dass sowohl zuerst der vordere Rand der Ausnehmung als auch anschließend der hintere Rand der Ausnehmung mit der Bohrlochwandung wechselwirken kann.

Um zu gewährleisten, dass die Ausnehmung, insbesondere der vordere und der hintere Rand der Ausnehmung auf der Spreizsegmentaußenseite, wirksam mit der Bohrlochwandung wechselwirken, anders gesprochen, "einschneiden" kann, ist in einer weiteren vorteilhaften Ausgestaltung der Erfindung die Ausnehmung scharfkantig ausgestaltet. Dies ist beispielsweise dadurch erreichbar, dass ein eventuell entstehender Grat bei der Herstellung der Ausnehmung nicht entfernt wird. Jedoch ist es auch möglich, die Ausnehmung gezielt in einem separaten Arbeitsschritt, beispielsweise beim Stanzen, scharfkantig zu gestalten.

In einer besonders bevorzugten Ausgestaltung des erfindungsgemäßen Spreizankers ist die Ausnehmung als eine Einprägung ausgestaltet, die das Spreizsegment nicht gänzlich durchdringt, also die Spreizsegmentinnenseite nicht durchstößt. Vorzugsweise ist die Einprägung zudem derart ausgestaltet, dass die Einprägung bezogen auf die Längsachse des Bolzens eine nicht konstante Tiefe aufweist. Anders gesprochen, weist die Einprägung in Richtung des vorderen Endes der Spreizhülse, bezogen auf die Spreizsegmentaußenseite, eine größere Tiefe als in Richtung des hinteren Endes der Spreizhülse auf. Die Einprägung ist dadurch bevorzugt in Richtung des vorderen Endes der Spreizhülse gegenüber der Längsachse geneigt. Durch den Tiefengradienten ist gewährleistet, dass der vordere Rand der Ausnehmung, welcher einem vorderen Rand der Einprägung entspricht, möglichst gut mit der Bohrlochinnenwand wechselwirken, sprich sich in diese eingraben kann, wodurch eine zusätzliche Lasterhöhung des erfindungsgemäßen Spreizankers ermöglicht wird.

Um ein gutes Aufspreizverhalten des erfindungsgemäßen Spreizankers im Bohrloch im Befestigungsgrund zu gewährleisten, weist in einer weiteren vorteilhaften Ausgestaltung des erfindungsgemäßen Spreizankers jeder Schlitz eine lokale Aufweitung und jedes Spreizelement eine Ausnehmung auf, die in Umfangsrichtung symmetrisch zueinander angeordnet sind. Hierunter ist zu verstehen, dass die Ausnehmungen und die Aufweitungen bezüglich der Längsachse des Ankerschafts drehsymmetrisch ausgestaltet sind und in derselben Radialebene liegen.

Um ein möglichst symmetrisches Aufspreizverhalten des erfindungsgemäßen Spreizankers zu gewährleisten, weist die Spreizhülse des Spreizankers mehrere lokale Aufweitungen auf, die bezüglich der Schlitze symmetrisch angeordnet sind. Hierunter ist zu verstehen, dass die lokalen Aufweitungen eines Schlitzes, der zwei benachbarte Spreizsegmente voneinander trennt, in Umfangsrichtung gleich tief in die jeweiligen Spreizsegmente hineinragt. Die Aufweitungen sind sozusagen bezogen auf den jeweiligen Schlitz spiegelsymmetrisch. Zudem sind die lokalen Aufweitungen aller Schlitze vorzugsweise identisch ausgestaltet.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand zweier Ausführungsbeispiele erklärt.

Es zeigen:
- Figur 1: einen ersten erfindungsgemäßen Spreizanker mit einer erfindungsgemäßen Spreizhülse;
- Figur 2: eine vergrößerte und um 90° rotierte Darstellung der Spreizhülse aus Figur 1 in einem nicht montierten Zustand in einer ebenen Abwicklung;
- Figur 3: eine Seitenansicht der Spreizhülse aus Figur 2;
- Figur 4: eine weitere erfindungsgemäße Spreizhülse in einem nicht montierten Zustand in einer ebenen Abwicklung; und
- Figur 5: eine Seitenansicht der erfindungsgemäßen Spreizhülse aus Figur 4.

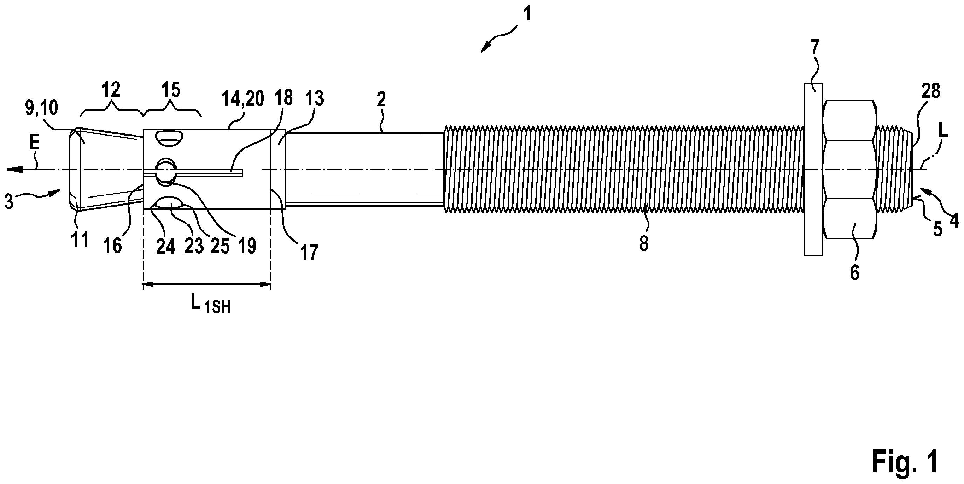

In Figur 1 ist ein erster erfindungsgemäßer Spreizanker 1 dargestellt. Der Spreizanker 1 ist in einer Einbringrichtung E in ein Bohrloch in einen Befestigungsgrund (nicht dargestellt) schlagend einbringbar. Der Spreizanker 1 umfasst einen bezüglich einer Längsachse L rotationssymmetrischen Ankerschaft 2 mit einem vorderen Endbereich 3, welcher in ein Bohrloch einzubringen ist, sowie einen hinteren Endbereich 4 mit einer Werkzeugschlagfläche 5. Durch die Werkzeugschlagfläche 5 ist Schlagenergie auf den Spreizanker 1 übertragbar. Um den Spreizanker 1 nach dem Einschlagen im Befestigungsgrund zu verspannen, ist im hinteren Endbereich 4 des Ankerschafts 2 eine Mutter 6 und eine Unterlegscheibe 7 auf einem Gewinde 8 angeordnet. Im vorderen Endbereich 3 des Ankerschafts 2 ist ein Spreizelement 9 in Form eines Konus 10 angeordnet, der sich von einem vorderen Ende 27 des Ankerschafts 2 in Richtung eines hinteren Endes 28 des Ankerschafts 2 verjüngt. An das vordere Ende 27 des Ankerschafts 2 schließt sich an den Konus 10 ein kurzer zylindrischer Abschnitt 11 an. Die Ausdehnung des als Konus 10 ausgebildeten Spreizelements 9 entlang der Längsachse L des Ankerschafts 2 definiert einen Spreizbereich 12.

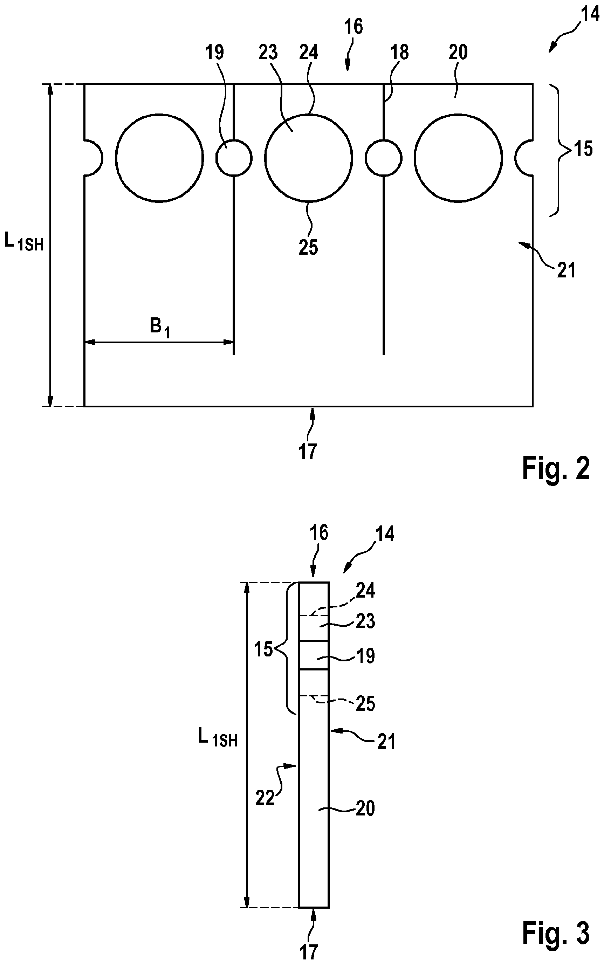

Zwischen dem Spreizbereich 12 und einer den Ankerschaft 2 kreisrund umlaufenden Schulter 13 ist eine Spreizhülse 14 angeordnet. In Figur 1 ist die Spreizhülse 14 in Umfangsrichtung um den Ankerschaft 2 gebogen, so dass ein durchgehender Schlitz entsteht, der zwei Spreizsegmente 20 vollständig in Umfangsrichtung trennt. Figur 2 zeigt eine vergrößerte und um 90° rotierte Darstellung der Spreizhülse 14 in einem nicht gebogenen Zustand nach der Herstellung durch Stanzen und Figur 3 zeigt eine Seitenansicht der Spreizhülse 14 aus Figur 2.

Die Schulter 13 des Ankerschafts 2 dient als Anschlag für die Spreizhülse 14 und verhindert, dass diese bei bestimmungsgemäßem Gebrauch des Spreizankers 1 in Richtung des hinteren Endes 28 des Ankerschafts 2 verschoben werden kann. Die Spreizhülse 14 weist zudem zwischen ihrem vorderen Ende 16, welches in Richtung des vorderen Endes 27 des Ankerschafts 2 orientiert ist, und ihrem hinteren Ende 17, welches in Richtung des hinteren Endes 28 des Ankerschafts 2 orientiert ist, eine Länge L_{1SH} auf, die sich entlang der Längsachse L erstreckt. Die Länge L_{1SH} ist so dimensioniert, dass die Spreizhülse 14 im dargestellten unverspreizten Zustand mit geringfügigem Spiel entlang der Längsachse L zwischen der Schulter 13 und dem Spreizbereich 12 gehalten ist.

Die Spreizhülse 14 weist einen vorderen Abschnitt 15 sowie zwei Schlitze 18 auf, die sich vom vorderen Ende 16 der Spreizhülse 14 in Richtung des hinteren Endes 17 der Spreizhülse 14 erstrecken. Die Schlitze 18 durchdringen das hintere Ende 17 der Spreizhülse 14 nicht. Ist die Spreizhülse 14 um den Ankerschaft 2 gebogen, wie in Figur 1 dargestellt, weist die Spreizhülse 14 drei Schlitze 18 auf, von denen sich ein Schlitz 18 über die komplette Länge L_{1SH} der Spreizhülse 14 erstreckt (nicht dargestellt).

Im vorderen Abschnitt 15 der Spreizhülse 14 sind lokale Aufweitungen 19 in den Schlitzen 18 angeordnet. Die lokalen Aufweitungen 19 sind kreisrund ausgebildet und bezogen auf einen jeweiligen Schlitz 18 symmetrisch angeordnet.

Die Schlitze 18 teilen die Spreizhülse 14 in drei Spreizsegmente 20, die alle eine identische Breite B₁ aufweisen. Die Spreizsegmente 20 weisen eine Spreizsegmentaußensite 21 auf, die in Richtung der Bohrlochwandung des Befestigungsgrunds (nicht dargestellt) orientiert ist. Weiter weisen die Spreizsegmente 20 eine Spreizsegmentinnenseite 22 auf, die in Richtung des Ankerschafts 2 orientiert ist. Die lokalen Aufweitungen 19 durchbrechen sowohl die Spreizsegmentaußenseite 21 als auch die Spreizsegmentinnenseite 22 gänzlich.

Darüber hinaus sind im vorderen Abschnitt 15 der Spreizhülse 14 kreisrunde Ausnehmungen 23 in den Spreizsegmenten 20 angeordnet, die nicht mit den Schlitzen 18 verbunden sind. Die kreisrunden Ausnehmungen 23 sind durch das Material der Spreizhülse 20 von den Schlitzen getrennt. Jeweils eine Ausnehmung 23 ist symmetrisch in einem Spreizsegment 20 angeordnet. Zudem befinden sich die lokalen Aufweitungen 19 und die Ausnehmungen 23 bezüglich einer Umfangsrichtung des Ankerschafts 2 auf einer gleichen Höhe.

Die Ausnehmungen 23 durchbrechen die Spreizsegmentaußen- und innenseiten 21, 22 gänzlich und weisen zudem einen vorderen Rand 24 und einen hinteren Rand 25 auf. Der vordere Rand 24 ist in Richtung des vorderen Endes 3 des Ankerschafts 2 und der hintere Rand 25 in Richtung des hinteren Endes 4 des Ankerschafts 2 orientiert.

Der vordere und der hintere Rand 24, 25 sind scharfkantig ausgestaltet und wechselwirken beim Verspreizen der Spreizhülse 14 mit der Bohrlochwandung im Befestigungsgrund (nicht dargestellt). Im dargestellten unverspreizten Zustand der Spreizhülse 14 verlaufen die Spreizsegmentaußenseiten 21 parallel zu der Längsachse L des Ankerschafts 2 und der erfindungsgemäße Spreizanker 1 kann in Einbringrichtung E in das Bohrloch in den Befestigungsgrund eingetrieben werden. Der Eintreibvorgang ist beendet, wenn die Unterlegscheibe 7 mit einer Oberfläche eines am Befestigungsgrund zu befestigenden Anbauteils (nicht dargestellt) in Kontakt tritt.

Wird anschließend die Mutter 6 mit einer Drehenergie beaufschlagt, wird der Ankerschaft 2 entgegen der Einbringrichtung E aus dem Befestigungsgrund gezogen, während die Spreizhülse 14, bezogen auf den Befestigungsgrund, im Wesentlichen ortsfest bleibt. Dadurch wird der Konus 10 in die Spreizhülse 14 eingezogen und die Spreizhülse 14 durch den Konus 10 aufgeweitet.

Während des Aufspreizens "schneidet" zuerst der vordere Rand 24 der Ausnehmung 23 des jeweiligen Spreizsegments 20 in die Bohrlochwandung ein, wodurch die Haltewerte des Spreizankers 1 im Befestigungsgrund erhöht werden. Wird die Spreizhülse 14 weiter auf den Konus 10 gezogen, gelangt auch der hintere Rand 25 der Ausnehmung 23 des jeweiligen Spreizsegments 20 mit der Bohrlochwandung in Kontakt, wodurch eine zusätzliche Erhöhung der Haltewerte des Spreizankers 1 im Befestigungsgrund erzielt wird. Erfindungsgemäß liegen die Ausnehmungen 23 und die lokalen Aufweitungen 19 im verspreizten Zustand im Spreizbereich 12, so dass die Ränder 24 und 25 der Ausnehmungen 23 mit dem Befestigungsgrund in Kontakt treten.

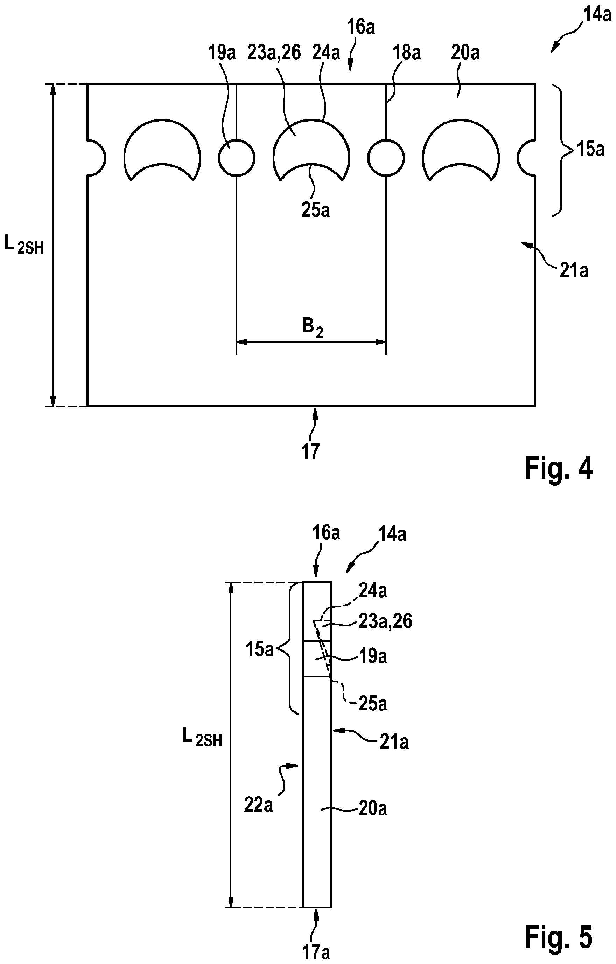

In Figur 4 ist eine weitere erfindungsgemäße Spreizhülse 14a dargestellt. Die erfindungsgemäße Spreizhülse 14a weist, wie die Spreizhülse 14 auch, einen vorderen Abschnitt 15a, sowie ein vorderes und ein hinteres Ende 16a, 17a auf, durch welche eine Länge L_{2SH} definiert ist. Zwei Schlitze 18a teilen die Spreizhülse 14a in drei Speizsegmente 20a, die eine identische Breite B₂ aufweisen. In einem vorderen Abschnitt 15a sind lokale Aufweitungen 19a der Schlitze 18a angeordnet. Die Spreizsegmente 20a weisen eine Spreizsegmentaußen- und innenseite 21a, 22a auf. Wie auch die Spreizhülse 14, weist die Spreizhülse 14a im vorderen Abschnitt 15a Ausnehmungen 23a mit einem scharfkantigen vorderen und hinteren Rand 24a, 25a auf. Die Ausnehmung 23a ist bei der erfindungsgemäßen Spreizhülse 14a jedoch nicht wie bei der Spreizhülse 14 als Durchbruch, sondern in der Form einer halbmondähnlichen Einprägung 26 ausgestaltet, die die Spreizsegmente 20a nicht vollständig durchdringen. Die Einprägung 26 ist in die Spreizsegmentaußenseite 21a gepresst und zwar derart, dass die Einprägung 26 in Richtung des vorderen Endes 16a der Spreizhülse 14a bezogen auf die Spreizsegmentaußenseite 21a eine größere Tiefe aufweist, als in Richtung des hinteren Endes 17a.

Dadurch, dass die Einprägung 26 die Spreizsegmentinnenseite 22a nicht gänzlich durchdringt und das Material im Bereich der Einprägung 26 durch das Einprägen und Umformen verfestigt wird, weist die Spreizhülse 14a verglichen mit der Spreizhülse 14 ein steiferes Aufspreizverhalten auf. Darunter ist zu verstehen, dass mehr Kraft zum Aufspreizen der Spreizhülse 14a, also zum Biegen der Spreizsegmente 20a, benötigt wird. Durch die besondere Ausgestaltung der Einprägung 26 sind besonders gute Haltewerte eines Spreizankers 1 in einem Befestigungsgrund erreichbar.

### Bezugszeichenliste

- 1: Spreizanker
- 2: Ankerschaft
- 3: vorderer Endbereich des Ankerschafts 2
- 4: hinterer Endbereich des Ankerschafts 2
- 5: Werkzeugschlagfläche
- 6: Mutter
- 7: Unterlegscheibe
- 8: Gewinde
- 9: Spreizelement
- 10: Konus
- 11: zylindrischer Abschnitt
- 12: Spreizbereich
- 13: Schulter
- 14, 14a: Spreizhülse
- 15, 15a: vorderer Abschnitt der Spreizhülse 14, 14a
- 16, 16a: vorderes Ende der Spreizhülse 14, 14a
- 17, 17a: hinteres Ende der Spreizhülse 14, 14a
- 18, 18a: Schlitz der Spreizhülse 14, 14a
- 19, 19a: lokale Aufweitung des Schlitzes 18, 18a
- 20, 20a: Spreizsegment der Spreizhülse 14, 14a
- 21, 21a: Spreizsegmentaußenseite des Spreizsegments 20, 20a
- 22, 22a: Spreizsegmentinnenseite des Spreizsegments 20, 20a
- 23, 23a: Ausnehmung des Spreizsegments 20, 20a
- 24, 24a: vorderer Rand der Ausnehmung 23, 23a des Spreizsegments 20, 20a
- 25, 25a: hinterer Rand der Ausnehmung 23, 23a des Spreizsegments 20, 20a
- 26: Einprägung
- 27: vorderes Ende des Ankerschafts 2
- 28: hinteres Ende des Ankerschafts 2
- L: Längsachse des Ankerschafts 2
- L_{1SH}, L_{2SH}: Länge der Spreizhülse 14, 14a
- B₁, B₂: Breite eines Spreizsegments 20, 20a
- E: Einbringrichtung des Spreizankers 1

## Patentansprüche

1. Spreizanker (1) zur Verankerung in einem Befestigungsgrund, wobei der Spreizanker (1) einen Ankerschaft (2) aus Metall umfasst, der sich entlang einer Längsachse (L) erstreckt, und der ein vorderes und ein hinteres Ende (27, 28) umfasst, wobei am vorderen Ende (27) ein Spreizbereich (12) mit einem Spreizelement (9) zum Aufspreizen einer Spreizhülse (14, 14a) ausgebildet ist,
wobei der Spreizanker (1) die Spreizhülse (14, 14a) umfasst, die den Ankerschaft (2) in Umfangsrichtung zumindest teilweise umgreift und auf das Spreizelement (9) aufschiebbar ist, wobei die Spreizhülse (14, 14a) Schlitze (18, 18a) aufweist, die in Richtung der Längsachse (L) des Ankerschafts (2) verlaufen und die Spreizhülse (14, 14a) in Spreizsegmente (20, 20a) teilt, und
wobei ein Spreizsegment (20, 20a) eine Ausnehmung (23, 23a) aufweist, die mit den Schlitzen (18, 18a) nicht verbunden ist und wobei mindestens ein Schlitz (18, 18a) in Umfangsrichtung eine lokale Aufweitung (19, 19a) aufweist,
**dadurch gekennzeichnet, dass** die Ausnehmung (23, 23a) und die lokale Aufweitung (19, 19a) derart in einem vorderen Abschnitt (15, 15a) der Spreizhülse (14, 14a) angeordnet sind, dass sie in einem verspreizten Zustand des Spreizankers (1) im Spreizbereich (12) des Ankerschafts (2) angeordnet sind, so dass ein vorderer Rand (24, 24a) der Ausnehmung (23, 23a) an der Spreizsegmentaußenseite (21, 21a), der in Richtung des vorderen Endes (16, 16a) der Spreizhülse (14, 14a) orientiert ist, in einem Bohrloch in Richtung einer Bohrlochwandung gepresst wird, wodurch der vordere Rand (24, 24a) mit der Bohrlochwandung eine formschlüssige und/oder reibschlüssige Verbindung bildet.

2. Spreizanker (1) nach Anspruch 1, **dadurch gekennzeichnet, dass** die Ausnehmung (23, 23a) und die lokale Aufweitung (19, 19a) in Umfangsrichtung bezüglich der Längsachse (L) des Ankerschafts (2) in derselben Radialebene liegen.

3. Spreizanker (1) nach Anspruch 1 oder 2, **dadurch gekennzeichnet, dass** die Ausnehmung (23, 23a) kreisrund oder halbmondartig ausgestaltet ist.

4. Spreizanker nach einem der Ansprüche 1 bis 3, **dadurch gekennzeichnet, dass** die Ausnehmung (23) das Spreizsegment (20) vollständig durchdringt.

5. Spreizanker (1) nach einem der Ansprüche 1 bis 4, **dadurch gekennzeichnet, dass** die Ausnehmung (23, 23a) scharfkantig ausgestaltet ist.

6. Spreizanker nach einem der Ansprüche 1 bis 5, **dadurch gekennzeichnet, dass** die Ausnehmung (23a) als Einprägung (26) ausgestaltet ist, die das Spreizsegment (20a) nicht gänzlich durchdringt.

7. Spreizanker (1) nach Anspruch 6, **dadurch gekennzeichnet, dass** die Einprägung (26) entlang der Längsachse (L) des Ankerschafts (2) eine nicht konstante Tiefe aufweist.

8. Spreizanker (1) nach einem der vorhergehenden Ansprüche, **dadurch gekennzeichnet, dass** die Spreizhülse (14, 14a) des Spreizankers (1) mehrere lokale Aufweitungen (19, 19a) und mehrere Ausnehmungen (23, 23a) aufweist, die in Umfangsrichtung symmetrisch zueinander angeordnet sind.

9. Spreizanker (1) nach einem der vorhergehenden Ansprüche, **dadurch gekennzeichnet, dass** die Spreizhülse (14, 14a) des Spreizankers (1) mehrere lokale Aufweitungen (19, 19a) aufweist, die bezüglich der Schlitze (18, 18a) symmetrisch angeordnet sind.

## Claims

1. Expansible anchor (1) for anchoring in a fixing substrate, wherein the expansible anchor (1) comprises an anchor shank (2) made of metal which extends along a longitudinal axis (L) and which comprises a front and a rear end (27, 28),
wherein at the front end (27) there is formed an expander region (12) having an expander element (9) for expansion of an expansion sleeve (14, 14a), wherein the expansible anchor (1) comprises the expansion sleeve (14, 14a) which engages at least partly around the anchor shank (2) in a circumferential direction and is pushable onto the expander element (9), the expansion sleeve (14, 14a) having slots (18, 18a) which run in the direction of the longitudinal axis (L) of the anchor shank (2) and divides the expansion sleeve (14, 14a) into expansion segments (20, 20a), and
wherein an expansion segment (20, 20a) has a recess (23, 23a) which is not connected to the slots (18, 18a) and wherein at least one slot (18, 18a) has a local enlargement (19, 19a) in a circumferential direction,
**characterised in that** the recess (23, 23a) and the local enlargement (19, 19a) are arranged in a front portion (15, 15a) of the expansion sleeve (14, 14a) in such a way that in an expanded state of the expansible anchor (1) they are arranged in the expander region (12) of the anchor shank (2), so that in a drilled hole a front edge (24, 24a) of the recess (23, 23a) on the expansion segment outer side (21, 21a), which is oriented in the direction of the front end (16, 16a) of the expansion sleeve (14, 14a), is pressed in the direction of a wall of the drilled hole, with the result that the front edge (24, 24a) forms an interlocking and/or frictional connection with the wall of the drilled hole.

2. Expansible anchor (1) according to claim 1, **characterised in that** the recess (23, 23a) and the local enlargement (19, 19a) lie in the same radial plane with respect to the longitudinal axis (L) of the anchor shank (2) in a circumferential direction.

3. Expansible anchor (1) according to claim 1 or 2, **characterised in that** the recess (23, 23a) has a circular or half-moon-like configuration.

4. Expansible anchor according to any one of claims 1 to 3, **characterised in that** the recess (23) passes completely through the expansion segment (20).

5. Expansible anchor (1) according to any one of claims 1 to 4, **characterised in that** the recess (23, 23a) is of sharp-edged configuration.

6. Expansible anchor according to any one of claims 1 to 5, **characterised in that** the recess (23a) is configured as an impressed area (26) which does not pass entirely through the expansion segment (20a).

7. Expansible anchor (1) according to claim 6, **characterised in that** the impressed area (26) has a non-constant depth along the longitudinal axis (L) of the anchor shank (2).

8. Expansible anchor (1) according to any one of the preceding claims, **characterised in that** the expansion sleeve (14, 14a) of the expansible anchor (1) has a plurality of local enlargements (19, 19a) and a plurality of recesses (23, 23a) which are arranged symmetrically with respect to one another in a circumferential direction.

9. Expansible anchor (1) according to any one of the preceding claims, **characterised in that** the expansion sleeve (14, 14a) of the expansible anchor (1) has a plurality of local enlargements (19, 19a) which are arranged symmetrically with respect to the slots (18, 18a).

## Revendications

1. Ancre extensible (1) destinée à l'ancrage dans une base de fixation, l'ancre extensible (1) comprenant une tige d'ancre (2) en métal qui s'étend le long d'un axe longitudinal (L) et qui comprend une extrémité avant et une extrémité arrière (27, 28), une zone extensible (12) étant formée à l'extrémité avant (27) avec un élément extensible (9) destiné à élargir un manchon extensible (14, 14a), l'ancre extensible (1) comprenant le manchon extensible (14, 14a) qui enserre la tige d'ancre (2) au moins partiellement dans la direction circonférentielle et qui peut être poussé sur l'élément extensible (9), le manchon extensible (14, 14a) comportant des fentes (18, 18a) qui s'étendent dans la direction de l'axe longitudinal (L) de la tige d'ancre (2) et qui divisent le manchon extensible (14, 14a) en segments extensibles (20, 20a), et
un segment extensible (20, 20a) comportant un évidement (23, 23a) qui n'est pas relié aux fentes (18, 18a) et au moins une fente (18, 18a) comportant un élargissement local (19, 19a) dans la direction circonférentielle,
**caractérisée en ce que** l'évidement (23, 23a) et l'élargissement local (19, 19a) sont disposés dans une portion avant (15, 15a) du manchon extensible (14, 14a) de telle sorte qu'ils soient disposés dans un état étendu de l'ancre extensible (1) dans la zone extensible (12) de la tige d'ancre (2), de sorte qu'un bord avant (24, 24a) de l'évidement (23, 23a) soit pressé dans un trou de forage en direction d'une paroi de trou de forage sur le côté extérieur de segment extensible (21, 21a) qui est orienté en direction de l'extrémité avant (16, 16a) du manchon extensible (14, 14a), de sorte que le bord avant (24, 24a) forme une liaison par complémentarité de formes et/ou à friction avec la paroi de trou de forage.

2. Ancre extensible (1) selon la revendication 1,
**caractérisée en ce que** l'évidement (23, 23a) et l'élargissement local (19, 19a) sont situés dans le même plan radial dans la direction circonférentielle par rapport à l'axe longitudinal (L) de la tige d'ancre (2) .

3. Ancre extensible (1) selon la revendication 1 ou 2, **caractérisée en ce que** l'évidement (23, 23a) est circulaire ou en forme de demi-lune.

4. Ancre extensible selon l'une des revendications 1 à 3, **caractérisée en ce que** l'évidement (23) traverse complètement le segment extensible (20).

5. Ancre extensible (1) selon l'une des revendications 1 à 4, **caractérisée en ce que** l'évidement (23, 23a) est conçu à bords vifs.

6. Ancre extensible selon l'une des revendications 1 à 5, **caractérisée en ce que** l'évidement (23a) est réalisé sous la forme d'une entaille (26) qui ne traverse pas complètement le segment extensible (20a).

7. Ancre extensible (1) selon la revendication 6,
**caractérisée en ce que** l'entaille (26) a une profondeur non constante le long de l'axe longitudinal (L) de la tige d'ancre (2).

8. Ancre extensible (1) selon l'une des revendications précédentes, **caractérisée en ce que** le manchon extensible (14, 14a) de l'ancre extensible (1) comporte plusieurs élargissements locaux (19, 19a) et plusieurs évidements (23, 23a) qui sont disposés symétriquement les uns par rapport aux autres dans la direction circonférentielle.

9. Ancre extensible (1) selon l'une des revendications précédentes, **caractérisée en ce que** le manchon extensible (14, 14a) de l'ancre extensible (1) comporte plusieurs élargissements locaux (19, 19a) qui sont disposés symétriquement par rapport aux fentes (18, 18a).
